# EUROPÄISCHE PATENTANMELDUNG

(11) **EP 4 043 262 A1**
(43) Veröffentlichungstag der Anmeldung: **17.08.2022**
(21) Anmeldenummer: 22151073.8
(22) Anmeldetag: 12.01.2022
(51) Int. Cl.: B60K 37/06, G06F 3/0488

(54) **ANZEIGE- UND BEDIENVORRICHTUNG ZUR STEUERUNG VON FAHRZEUGFUNKTIONEN**

(30) Priorität: 12.02.2021 DE 102021201375
(71) Anmelder: VOLKSWAGEN AG, 38440 Wolfsburg (DE)
(72) Erfinder: Seifert, Jörg, 06118 Halle (DE)

(57) **Zusammenfassung**

Die Erfindung betrifft eine Anzeige- und Bedienvorrichtung (10) zur Steuerung von Fahrzeugfunktionen, insbesondere eines Kraftfahrzeuges, mit einem ersten Bedien- und Anzeigebereich (12), wobei im ersten Bedien- und Anzeigebereich (12) Fahrzeugfunktionen zumindest teilweise einstellbar sind und wobei der erste Bedien- und Anzeigebereich (12) zumindest teilweise berührungssensitiv ist.

Bei einer Anzeige- und Bedienvorrichtung (10) zur Steuerung von Fahrzeugfunktionen, bei dem die Bedienbarkeit vereinfacht und intuitiver gestaltet wird, ist vorgesehen, dass in einem zweiten Bedien- und/oder Anzeigebereich (14) Fahrzeugfunktionen gebündelt eingestellt werden können.

## Beschreibung

Die Erfindung betrifft eine Anzeige- und Bedienvorrichtung zur Steuerung von Fahrzeugfunktionen, insbesondere eines Kraftfahrzeuges, mit einem ersten Bedien- und Anzeigebereich, wobei im ersten Bedien- und Anzeigebereich Fahrzeugfunktionen zumindest teilweise einstellbar sind und wobei der erste Bedien- und Anzeigebereich zumindest teilweise berührungssensitiv ist.

In modernen Kraftfahrzeugen werden immer mehr elektronische Einrichtungen installiert, die vom Fahrer des Fahrzeugs individuell bedienbar sind. Darunter fällt beispielsweise das Infotainmentsystem und die damit verbundene Bedienung des Radios oder anderer Musikquellen. Daneben gehören Fahrassistenzsysteme, wie Spurhaltesysteme oder Navigationssysteme, beinahe zum Standard. Auch fahrzeugspezifische Einstellungen, beispielsweise Fahrwerkeinstellungen, können häufig über elektronische Einrichtungen vom Fahrer des Fahrzeugs angepasst werden. Zusätzlich wird das Öffnen der Fenster beinahe ausschließlich elektronisch realisiert und auch die Lüftung und/oder Klimaanlage stellen weitere bedienbare elektronische Einheiten in einem modernen Kraftfahrzeug dar.

Um die Bedienung so einfach wie möglich zu gestalten, wird üblicherweise fahrzeugseitig eine Multifunktions-Bedieneinrichtung vorgesehen, umfassend einen Anzeigebereich, üblicherweise ein hinreichend großes Display, an dem eine Vielzahl unterschiedlicher Funktionsgruppen oder Funktionen, die ausgewählt werden können, angezeigt werden. Die Multifunktions-Bedieneinrichtung kann über verschiedene Bedienelemente gesteuert werden. Mit der Zeit haben sich berührungssensitive Displays durchgesetzt, die es ermöglichen, die zu steuernden Funktionen übersichtlich darzustellen.

Die WO 2013/159911 A1 zeigt beispielsweise eine Multifunktions-Bedieneinrichtung für ein Kraftfahrzeug mit einer Bildschirmanzeige in Form eines Touchscreens und einem Bedienelement zum An- oder Auswählen einer an der Bildschirmanzeige angezeigten Funktion. Das Bedienelement ist dabei als drückbare Taste mit zusätzlicher Berührungssensitivität ausgestaltet.

Die EP 3 040 842 A1 offenbart eine Anwenderschnittstelle zur hybriden Nutzung einer Anzeigeeinheit eines Fortbewegungsmittels mit einem Primärbildschirm und einer zusätzlichen Fingerleiste mit einer Annäherungssensorik, um die Bedienung der Anwenderschnittstelle mittels Gestensteuerung zu vereinfachen.

Die aus dem Stand der Technik bekannten Lösungen decken nur einen Teil der einstellbaren Fahrzeugfunktionen ab. Verschiedene Komfortfunktionen werden mittels separater elektronischer Einrichtungen bedient, um die Bildschirmanzeige nicht zu überladen.

Der Erfindung liegt nun die Aufgabe zugrunde, eine Bedien- und Anzeigevorrichtung zur Steuerung von Fahrzeugfunktionen anzugeben, bei denen die Bedienbarkeit vereinfacht und intuitiver gestaltet wird.

Diese Aufgabe ist bei der vorliegenden Erfindung durch die Merkmale des Kennzeichnungsteils des Patentanspruchs 1 zunächst dadurch gelöst, dass mindestens ein zweiter Bedien- und/oder Anzeigebereich vorgesehen ist, dass der zweite Bedien- und/oder Anzeigebereich im Randbereich des ersten Bedien- und Anzeigebereichs angeordnet ist, dass Fahrzeugfunktionen zumindest teilweise im zweiten Bedien- und/oder Anzeigebereich einstellbar sind und dass der zweite Bedien- und/oder Anzeigebereich zumindest teilweise berührungssensitiv ist.

Bei dem ersten Bedien- und Anzeigebereich kann es sich um ein Display im Mittelbereich oder im Cockpitbereich, beispielsweise im Bereich eines Kombiinstruments des Fahrzeugs, handeln. Das Display ist berührungssensitiv ausgestaltet. Unter der Berührungssensitivität ist dabei eine Touchfunktion zu verstehen, die beispielsweise durch ein kapazitives Display und/oder ein resistives Display realisiert werden kann.

Unter Fahrzeugfunktionen sind alle Einstellungen zu verstehen, die mittels einer elektronischen Vorrichtung vom Fahrer des Fahrzeugs eingestellt werden können.

Bei dem zweiten Bedien- und/oder Anzeigebereich kann es sich sowohl ausschließlich um einen Bedienbereich ohne Anzeigefunktion als auch ausschließlich um einen Anzeigebereich ohne Bedienfunktion handeln. Bevorzugt handelt es sich aber um eine Kombination aus Bedien- und Anzeigebereich. Der zweite Bedien- und/oder Anzeigebereich ist ebenfalls berührungssensitiv ausgestaltet. Wie auch beim ersten Bedien- und Anzeigebereich kann es sich beispielsweise um ein Display mit Touchfunktion handeln, aber auch Teil des Displays der ersten Bedien- und Anzeigeeinrichtung sein. Auch beim zweiten Bedien- und/oder Anzeigebereich kann die Berührungssensitivität durch ein kapazitives oder resistives Display realisiert werden. Der zweite Bedien- und/oder Anzeigebereich kann aber auch lediglich als Schieber zur Steuerung verschiedener Funktionen ausgestaltet sein. Dieser kann mechanisch aber auch elektronisch per Touchfunktion bereitgestellt werden.

Die zweite Bedien- und/oder Anzeigeeinrichtung ist in einem Randbereich der ersten Bedien- und Anzeigeeinrichtung angeordnet. Unter dem Randbereich der ersten Bedien- und Anzeigeeinrichtung ist dabei mindestens ein Abschnitt zu verstehen, in dem die zweite Bedien- und/oder Anzeigeeinrichtung derart angeordnet sein kann, dass die Funktionalität der ersten Bedien- und Anzeigeeinrichtung nicht beeinträchtigt wird.

Ein erster Vorteil der erfindungsgemäßen Vorrichtung besteht darin, dass einstellbare Fahrzeugfunktionen nun innerhalb eines bestimmten Bereiches einstellbar sind. Wenn der zweite Bedien- und/oder Anzeigebereich Teil des ersten Bedien- und Anzeigebereichs ist, können auf diese Weise auch zusätzliche elektronische Einrichtungen eingespart werden.

Weitere bevorzugte Ausgestaltungen der Erfindung ergeben sich aus den übrigen, in den Unteransprüchen genannten Merkmalen.

Bei einer ersten Ausgestaltung der erfindungsgemäßen Bedien- und Anzeigevorrichtung ist vorgesehen, dass der zweite Bedien- und/oder Anzeigebereich eine Kraftsensorik umfasst. Durch die Kraftsensorik kann sichergestellt werden, dass der zweite Bedien- und/oder Anzeigebereich erst ab einem bestimmten Druck anspricht, der beispielsweise dem typischen Fingerdruck des Anwenders auf dem Display entspricht, so dass Einstellungen nicht unabsichtlich vorgenommen werden. Die Kraftsensorik kann derart eingestellt werden, dass der zweite Bedien- und/oder Anzeigebereich auch bei einem zu hohen Druck nicht bedienbar ist. Dies kann beispielsweise der Fall sein, wenn Gegenstände unabsichtlich im Bereich des zweiten Bedien- und/oder Anzeigebereichs gelagert und/oder abgestützt werden.

Bei einer weiteren Ausgestaltung der erfindungsgemäßen Bedien- und Anzeigevorrichtung ist vorgesehen, dass zumindest durch Berührung des zweiten Bedien- und/oder Anzeigebereichs ein akustisches Feedback und/oder ein haptisches Feedback erfolgt. Das haptische Feedback kann dabei mechanisch erfolgen, beispielsweise durch eine Drucktaste. Bevorzugt wird das haptische Feedback durch Vibration vermittelt. Durch ein akustisches Feedback, beispielsweise einem Signalton, kann dem Bediener vermittelt werden, dass seine Eingabe beziehungsweise Berührung registriert wurde.

Bei einer weiteren vorteilhaften Ausgestaltung der erfindungsgemäßen Vorrichtung ist vorgesehen, dass im zweiten Bedien- und/oder Anzeigebereich eine Mulde zur Führung des Fingers eines Anwenders ausgebildet ist. Die Führung des Fingers hat insbesondere bei Schiebereglern, egal ob digital oder mechanisch, den Vorteil, dass eine möglichst fehlerfreie Bedienung realisiert wird, ohne dass ein Abrutschen des Fingers zu einer Fehleinstellung im ersten Bedien- und Anzeigebereich führt.

Um die Bedienung der Bedien- und Anzeigevorrichtung weiter zu vereinfachen, ist bei einer weiteren Ausgestaltung der Erfindung vorgesehen, dass der zweite Bedien- und/oder Anzeigebereich am oberen und/oder unteren Randbereich des ersten Bedien- und Anzeigebereichs angeordnet ist. Auf diese Weise können Einstellungen der Fahrzeugfunktionen vereinfacht ausgeführt werden, da eine Orientierung am oberen oder unteren Randbereich zu einer intuitiven Bedienung beiträgt.

Zusätzlich oder alternativ ist bei einer weiteren Ausgestaltung der Erfindung vorgesehen, dass der zweite Bedien- und/oder Anzeigebereich am linken und/oder rechten Randbereich des ersten Bedien- und Anzeigebereichs angeordnet ist. Entsprechend einer Orientierung im unteren oder oberen Randbereich können Einstellungen der Fahrzeugfunktionen auf diese Weise vereinfacht ausgeführt werden, da eine Orientierung am oberen oder unteren Randbereich zu einer intuitiven Bedienung beiträgt.

Bei einer besonders vorteilhaften Ausgestaltung der erfindungsgemäßen Vorrichtung ist vorgesehen, dass der zweite Bedien- und/oder Anzeigebereich vom ersten Bedien- und Anzeigebereich abgewinkelt ist. Wenn der erste Bedien- und Anzeigebereich nicht in einer Ebene mit dem zweiten Bedien- und/oder Anzeigebereich liegt, wird auf diese Weise sowohl eine optische als auch physische Trennung des ersten Bedien- und Anzeigebereichs und des zweiten Bedien- und/oder Anzeigebereichs erreicht. Durch die dreidimensionale Ausgestaltung der beiden Bereiche wird die Bedienbarkeit weiter vereinfacht und intuitiver gestaltet.

Um die intuitive Bedienbarkeit weiter zu verbessern, ist bei einer weiteren Ausgestaltung der erfindungsgemäßen Vorrichtung vorgesehen, dass der zweite Bedien- und/oder Anzeigebereich im rechten und/oder linken Randbereich des ersten Bedien- und Anzeigebereichs von dem ersten Bedien- und Anzeigebereich weg abgewinkelt ist, vorzugsweise in einem Winkel zwischen 20° und 90°. Der zweite Bedien- und/oder Anzeigebereich ist folglich optisch nach hinten gebogen. Diese Biegung ist vorzugsweise so ausgestaltet, dass nicht direkt ein rechter Winkel zwischen dem ersten Bedien- und Anzeigebereich und dem zweiten Bedien- und/oder Anzeigebereich entsteht, sondern vielmehr eine Schräge, so dass beim Führen des Fingers eines Anwenders eindeutig identifizierbar ist, dass der Finger nicht mehr im ersten Bedien- und Anzeigebereich liegt, die Bedienbarkeit durch den kleinen Winkel aber dennoch komfortabel ausgestaltet ist.

Denkbar ist auch, dass der zweite Bedien- und/oder Anzeigebereich im oberen Randbereich des ersten Bedien- und Anzeigebereichs von dem ersten Bedien- und Anzeigebereich weg abgewinkelt ist, vorzugsweise in einem Winkel zwischen 20° und 90°.

Zusätzlich oder alternativ ist bei einer weiteren Ausgestaltung der Erfindung vorgesehen, dass der zweite Bedien- und/oder Anzeigebereich im unteren Randbereich des ersten Bedien- und Anzeigebereichs zum ersten Bedien- und Anzeigebereich hin abgewinkelt ist, vorzugsweise in einem Winkel zwischen 90° und 160°. Der zweite Bedien- und/oder Anzeigebereich ist folglich optisch nach vorne gebogen. Diese Biegung ist vorzugsweise so ausgestaltet, dass nicht direkt ein rechter Winkel zwischen dem ersten Bedien- und Anzeigebereich und dem zweiten Bedien- und/oder Anzeigebereich entsteht, sondern vielmehr eine Schräge, so dass beim Führen des Fingers eines Anwenders eindeutig identifizierbar ist, dass der Finger nicht mehr im ersten Bedien- und Anzeigebereich liegt, die Bedienbarkeit durch den kleinen Winkel aber dennoch komfortabel ausgestaltet ist.

Bei einer bevorzugten Ausgestaltung der erfindungsgemäßen Vorrichtung ist vorgesehen, dass der erste Anzeige- und Bedienbereich an einer ersten Seitenfläche angeordnet ist und dass der zweite Bedien- und/oder Anzeigebereich an einer zweiten Seitenfläche angeordnet ist, die an die erste Seitenfläche angrenzt.

Denkbar ist beispielsweise, dass der erste Bedien- und Anzeigebereich als Display, insbesondere rechteckiges Display, ausgestaltet ist, das nur so weit im Fahrzeug verbaut ist, dass die Seitenflächen des Displays zumindest teilweise sichtbar sind, so dass zumindest eine Erhabenheit des Displays durch die hervorstehenden Seitenflächen erreicht wird. Die Seitenflächen können den zweiten Bedien- und/oder Anzeigebereich umfassen.

Die verschiedenen, in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung einer Anzeige- und Bedienvorrichtung zur Durchführung eines erfindungsgemäßen Verfahrens und
- Figur 2: eine schematische Darstellung der Funktionsweise der Anzeige- und Bedienvorrichtung gemäß Figur 1.

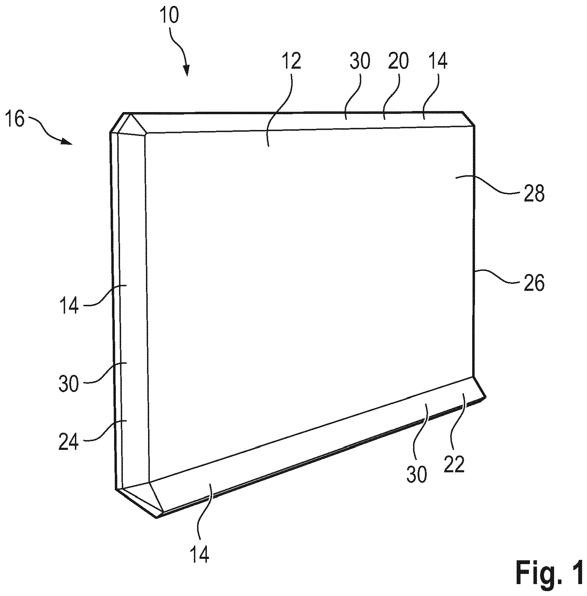

Figur 1 zeigt eine Anzeige- und Bedienvorrichtung 10 mit einem ersten Bedien- und Anzeigebereich 12. Ein zweiter Bedien- und/oder Anzeigebereich 14 ist im Randbereich 16 des ersten Bedien- und Anzeigebereichs 12 angeordnet. Der zweite Bedien- und/oder Anzeigebereich 14 ist im vorliegenden Ausführungsbeispiel umlaufend um den ersten Bedien- und Anzeigebereich 12 orientiert. Dadurch ergibt sich ein oberer Randbereich 20, ein unterer Randbereich 22, ein linker Randbereich 24 und ein rechter Randbereich 26.

Bei dem ersten Bedien- und Anzeigebereich 12 handelt es sich um ein Display, das beispielsweise im Mittelbereich oder im Cockpitbereich, beispielsweise im Bereich eines Kombiinstruments des Fahrzeugs, angeordnet werden kann. Das Display ist kapazitiv, also berührungssensitiv, ausgestaltet. Darüber hinaus ist eine Kraftsensorik vorgesehen, die entsprechende Berührungen registriert und Fehlbedienungen verhindert. Zusätzlich wird bei Berührung des zweiten Bedien- und/oder Anzeigebereichs 14 ein akustisches Signal sowie ein haptisches Feedback in Form von Vibration ausgesendet. Darüber hinaus ist im zweiten Bedien- und/oder Anzeigebereich 14 eine Mulde 18 zur Führung des Fingers eines Anwenders ausgebildet.

Der obere Randbereich 20, der linke Randbereich 24 und der rechte Randbereich 26 sind in einem Winkel von etwa 45° abgewinkelt, so dass sie optisch, ausgehend vom ersten Bedien- und Anzeigebereich 12, nach hinten gekippt sind. Der untere Randbereich 22 ist in einem Winkel von etwa 45° in die entgegengesetzte Richtung abgewinkelt, so dass er optisch, ausgehend vom ersten Bedien- und Anzeigebereich 12, nach vorne gekippt ist. Auf diese Weise wird die Bedienbarkeit vereinfacht.

Das Display ist rechteckig ausgestaltet. Der erste Bedien- und Anzeigebereich 12 ist an einer ersten Seitenfläche 28 angeordnet. Der zweite Bedien- und/oder Anzeigebereich 14 ist an einer zweiten Seitenfläche 30 angeordnet, die an die erste Seitenfläche 28 angrenzt.

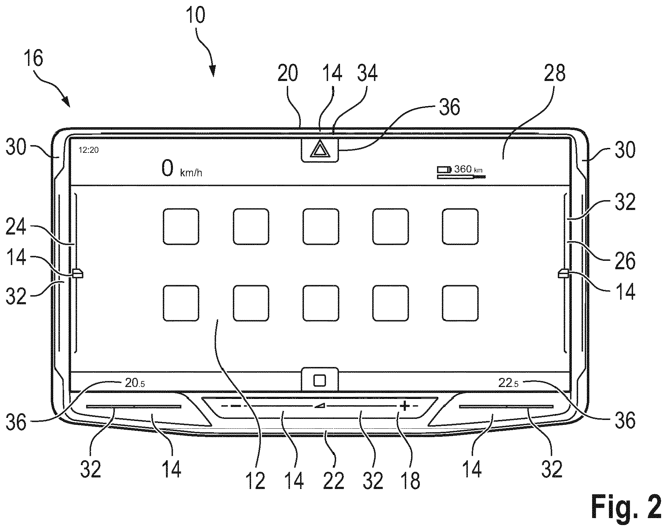

Figur 2 zeigt das Ausführungsbeispiel gemäß Figur 1 mit verschiedenen zusätzlichen Funktionen.

Es ist vorgesehen, dass die wesentlichen Fahrzeugfunktionen im zweiten Bedien- und/oder Anzeigebereich 14 gebündelt werden. Durch eine zentrale Bündelung der wesentlichen Bedien- und/oder Anzeigefunktionen des Fahrzeugs wird eine Kosteneinsparung erreicht, da Einzelmodule in Form von weiteren elektronischen Vorrichtungen entfallen können. Zusätzlich wird ein aufgeräumtes, reduziertes Fahrzeuginterieur realisiert.

Darüber hinaus werden Fahrzeugfunktionen, die den linken Bereich des Fahrzeugs betreffen, im Bereich des linken Randbereichs 24 des ersten Bedien- und Anzeigebereichs 12 eingestellt. Fahrzeugfunktionen, die den rechten Bereich des Fahrzeugs betreffen, werden im Bereich des rechten Randbereichs 26 des ersten Bedien- und Anzeigebereichs 12 eingestellt. Auf diese Weise wird eine intuitive Steuerungsmöglichkeit bereitgestellt.

Bei diesem Ausführungsbeispiel wird die Fensterheberfunktion für die linke Fahrzeugseite im linken Randbereich 24 des ersten Bedien- und Anzeigebereichs 12 durch den zweiten Bedien- und/oder Anzeigebereich 14 eingestellt. Das Öffnen und Schließen des Fensters beziehungsweise der Fenster kann durch einen berührungsempfindlichen Schieberegler 32 im linken Randbereich 24 des ersten Bedien- und Anzeigebereichs 12 durch den zweiten Bedien- und/oder Anzeigebereich 14 geregelt werden. Entsprechend wird das Fenster beziehungsweise werden die Fenster durch einen berührungsempfindlichen Schieberegler 32 im rechten Randbereich 26 des ersten Bedien- und Anzeigebereichs 12 durch den zweiten Bedien- und/oder Anzeigebereich 14 eingestellt.

Die Temperatureinstellungen der Heizung beziehungsweise der Klimaanlage können im unteren Randbereich 22 des ersten Bedien- und Anzeigebereichs 12 durch den zweiten Bedien- und/oder Anzeigebereich 14 eingestellt werden. Die Erhöhung oder Verringerung der Temperatur durch die Lüftungsanlage auf der Fahrerseite kann durch einen berührungsempfindlichen Schieberegler 32 auf der linken Seite des unteren Randbereichs 22 des ersten Bedien- und Anzeigebereichs 12 durch den zweiten Bedien- und/oder Anzeigebereich 14 geregelt werden. Entsprechend wird die Temperatur durch die Lüftungsanlage auf der Beifahrerseite durch einen berührungsempfindlichen Schieberegler 32 auf der rechten Seite des unteren Randbereichs 22 des ersten Bedien- und Anzeigebereichs 12 durch den zweiten Bedien- und/oder Anzeigebereich 14 eingestellt.

In der Mitte des unteren Randbereichs 22 kann durch einen weiteren Schieberegler 32 die Lautstärke des Infotainmentsystems eingestellt werden. Im oberen Randbereich ist durch einen berührungsempfindlichen Schalter 34 eine Möglichkeit gegeben, das Warnblinklicht einzuschalten.

Im ersten Bedien- und Anzeigebereich 12 können in der Nähe der durch den zweiten Bedien- und/oder Anzeigebereich 14 einstellbaren Funktionen entsprechende Anzeigen 36 verortet sein, die Auskunft über die Funktionen der einzelnen Schieberegler 32 und Schalter 34 geben. Im ersten Bedien- und Anzeigebereich 12 werden verschiedene Menüs oder aktive Kontexte des Infotainmentsystems oder des Navigationssystems angezeigt. Zusätzlich werden auch weitere Informationen, wie beispielsweise Fahrinformationen, angezeigt. Dazu gehören Inhalte des Kombiinstruments, die permanent angezeigt werden können. Anzeigen der Geschwindigkeit, der verbleibenden Reichweite, der Schaltstufe, Informationen über Blinker und/oder Warnmeldungen sind denkbar.

### Bezugszeichenliste

- 10: Anzeige- und Bedienvorrichtung
- 12: erster Bedien- und Anzeigebereich
- 14: zweiter Bedien- und/oder Anzeigebereich
- 16: Randbereich
- 18: Mulde
- 20: oberer Randbereich
- 22: unterer Randbereich
- 24: linker Randbereich
- 26: rechter Randbereich
- 28: erste Seitenfläche
- 30: zweite Seitenfläche
- 32: Schieberegler
- 34: Schalter
- 36: Anzeige

## Patentansprüche

1. Anzeige- und Bedienvorrichtung (10) zur Steuerung von Fahrzeugfunktionen, insbesondere eines Kraftfahrzeuges, mit einem ersten Bedien- und Anzeigebereich (12), wobei im ersten Bedien- und Anzeigebereich (12) Fahrzeugfunktionen zumindest teilweise einstellbar sind und wobei der erste Bedien- und Anzeigebereich (12) zumindest teilweise berührungssensitiv ist, **dadurch gekennzeichnet, dass** mindestens ein zweiter Bedien- und/oder Anzeigebereich (14) vorgesehen ist, dass der zweite Bedien- und/oder Anzeigebereich (14) im Randbereich (16) des ersten Bedien- und Anzeigebereichs (12) angeordnet ist, dass Fahrzeugfunktionen zumindest teilweise im zweiten Bedien- und/oder Anzeigebereich (14) einstellbar sind und dass der zweite Bedien- und/oder Anzeigebereich (14) zumindest teilweise berührungssensitiv ist.

2. Anzeige- und Bedienvorrichtung (10) nach Anspruch 1, **dadurch gekennzeichnet, dass** der zweite Bedien- und/oder Anzeigebereich (14) eine Kraftsensorik umfasst.

3. Anzeige- und Bedienvorrichtung (10) nach Anspruch 1 oder 2, **dadurch gekennzeichnet, dass** zumindest durch Berührung des zweiten Bedien- und/oder Anzeigebereichs (14) ein akustisches Feedback und/oder ein haptisches Feedback erfolgt.

4. Anzeige- und Bedienvorrichtung (10) nach einem der Ansprüche 1 bis 3, **dadurch gekennzeichnet, dass** im zweiten Bedien- und/oder Anzeigebereich (14) eine Mulde (18) zur Führung des Fingers eines Anwenders ausgebildet ist.

5. Anzeige- und Bedienvorrichtung (10) nach einem der Ansprüche 1 bis 4, **dadurch gekennzeichnet, dass** der zweite Bedien- und/oder Anzeigebereich (14) am oberen Randbereich (20) und/oder unteren Randbereich (22) des ersten Bedien- und Anzeigebereichs (12) angeordnet ist.

6. Anzeige- und Bedienvorrichtung (10) nach einem der Ansprüche 1 bis 5, **dadurch gekennzeichnet, dass** der zweite Bedien- und/oder Anzeigebereich (14) am linken Randbereich (24) und/oder rechten Randbereich (26) des ersten Bedien- und Anzeigebereichs (12) angeordnet ist.

7. Anzeige- und Bedienvorrichtung (10) nach einem der Ansprüche 1 bis 6, **dadurch gekennzeichnet, dass** der zweite Bedien- und/oder Anzeigebereich (14) vom ersten Bedien- und Anzeigebereich (12) abgewinkelt ist.

8. Anzeige- und Bedienvorrichtung (10) nach Anspruch 7, **dadurch gekennzeichnet, dass** der zweite Bedien- und/oder Anzeigebereich (14) im rechten Randbereich (26) und/oder linken Randbereich (24) des ersten Bedien- und Anzeigebereichs (12) von dem ersten Bedien- und Anzeigebereich (12) weg abgewinkelt ist, vorzugsweise in einem Winkel zwischen 20° und 90°.

9. Anzeige- und Bedienvorrichtung (10) nach Anspruch 7 oder 8, **dadurch gekennzeichnet, dass** der zweite Bedien- und/oder Anzeigebereich (14) im unteren Randbereich (22) des ersten Bedien- und Anzeigebereichs (12) zum ersten Bedien- und Anzeigebereich (12) hin abgewinkelt ist, vorzugsweise in einem Winkel zwischen 90° und 160°.

10. Anzeige- und Bedienvorrichtung (10) nach einem der Ansprüche 1 bis 9, **dadurch gekennzeichnet, dass** der erste Anzeige- und Bedienbereich (12) an einer ersten Seitenfläche (28) angeordnet ist und dass der zweite Bedien- und/oder Anzeigebereich (14) an einer zweiten Seitenfläche (30) angeordnet ist, die an die erste Seitenfläche (28) angrenzt.
